# EUROPÄISCHE PATENTSCHRIFT

(11) **EP 0 734 926 B1**
(45) Veröffentlichungstag und Bekanntmachung des Hinweises auf die Patenterteilung: **09.06.1999**
(21) Anmeldenummer: 96103819.7
(22) Anmeldetag: 11.03.1996
(51) Int. Cl.: B60T 8/18, B60T 11/34

(54) **Ventileinrichtung für Lastbremsventile**
Valve device for load-depending brake valves
Soupape pour soupape de freinage en fonction de la charge

(30) Priorität: 29.03.1995 DE 19511432
(43) Veröffentlichungstag der Anmeldung: 02.10.1996
(73) Patentinhaber: KNORR-BREMSE Systeme für Schienenfahrzeuge GmbH, 80809 München (DE)
(72) Erfinder: Goritz, Bernd, 80809 München (DE); Heller, Martin, Dr., 12629 Berlin (DE)

(56) Entgegenhaltungen:
- EP-A- 0 385 162
- DE-A- 2 801 778

## Beschreibung

Die Erfindung betrifft eine Ventileinrichtung für Lastbremsventile von Druckluftbremsen von Schienenfahrzeugen.

Lastbremsventile für Eisenbahnfahrzeuge ermöglichen es, Fahrzeuge lastunabhängig abzubremsen, insbesondere derart, daß ein Verkehr spezieller Güterwagen mit hohen Geschwindigkeiten möglich ist. Diese Abbremsung ist höher als bei für den Verkehr mit den üblichen Geschwindigkeiten vorgesehenen Güterwagen.

Bei einem Zusammenstellen von Güterwagen mit der üblichen und der höheren Abbremsung in Zügen ergibt sich der Nachteil, daß die Fahrzeuge mit der höheren Abbremsung einen Anteil an Energie beim Bremsen umwandeln, der größer als der Gewichtsanteil dieser Fahrzeuge ist, d.h. sie übernehmen teilweise die Abbremsung benachbarter Fahrzeuge. Da die Energieumwandlung zum Wärmeeintrag in die Räder führt, schädigt diese Erscheinung die Räder des Wagens. Diese Schädigung kann insbesondere bei langanhaltenden Bremsungen auf Gefällestrecken zu einer Betriebsgefahr führen.

Bei langanhaltenden Bremsungen werden durch Bremsdrücke bestimmte Grenzwerte nicht überschritten, die deutlich kleiner als die maximal möglichen Werte sind. Das liegt daß bei den maximal möglichen Werten stets ein Anhalten der Fahrzeuge eintritt, wodurch die Bremsung nicht mehr langanhaltend ist.

Es ist daher das Ziel der Erfindung, eine Ventileinrichtung (als Zusatz) für Lastbremsventile von Schienenfahrzeugen zu schaffen, welche die Bremsdruckcharakteristik von Fahrzeugen mit hoher Abbremsung in dem Bereich, der langanhaltenden Bremsungen entspricht, an die der Fahrzeuge mit der üblichen Charakterisik angleicht. Darüber hinaus sollte die hohe Abbremsung wieder derart bereitstehen, daß auch der Bremsweg der schnellfahrenden Fahrzeuge eingehalten werden kann.

Die Erfindung erreicht dieses Ziel durch den Gegenstand des Anspruches 1. Die Erfindung schafft eine Art Knickventil, welches einen Bremsdruck, der als Eingangsdruck dient, in einen Ausgangsdruck umwandelt.

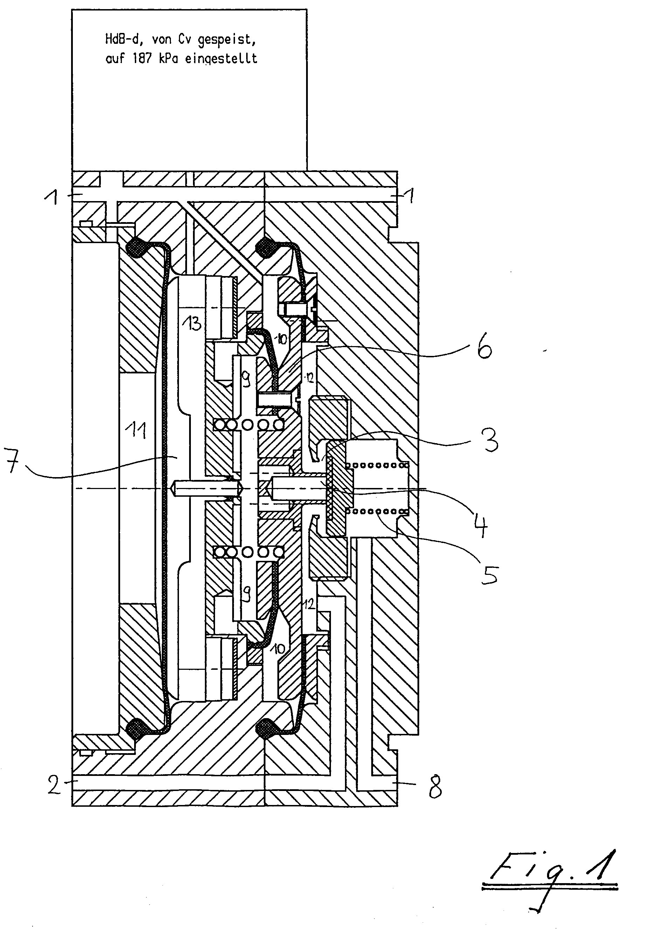

Nachfolgend wird die Erfindung unter Bezug auf die Zeichnung näher beschrieben. Fig. 1 zeigt einen Schnitt durch eine erfindungsgemäße Ventileinrichtung.

Nach Fig. 1 ist ein erfindungsgemäßes Knickventil als eine Anordnung ausgebildet, die einen Eintritt 1 für den Eingangsdruck und einen Austritt 2 für den Ausgangsdruck aufweist. Ein Einlaßventil 3 und ein Auslaßventil 4 weisen gegenläufige Öffnungrichtungen auf, wobei nur eines der Ventile geöffnet sein kann, aber auch beide in einer stabilen Abschlußstellung geschlossen sein können. Zur Herstellung der Stabilität der Abschlußstellung ist eine Druckfeder 5 auf den Ventilen angeordnet. Zum Einlaßventil führt ein weiterer Eingang 8 für einen Speisedruck. Die Anordnung weist folgende Räume und Verbindungen auf:
Raum 9 - mit der Umgebung verbunden
Raum 10 und 11 - mit dem Eingangsdruck verbunden
Raum 12 - mit dem Ausgangsdruck verbunden
Raum 13 - mit einem begrenzten Druck vorgegebener Größe verbunden bzw. Druckfedern enthaltend.

Die Ventile werden durch einen Druckteilungskolben 6 und einen Nachbremskolben 7 betätigt. Der Druckteilungskolben 6 ist in Öffnungsrichtung des Einlaßventils mit dem Eingangsdruck in Raum 10, in Öffnungsrichtung des Auslaßventils mit dem Ausgangsdruck in Raum 12 belastet. Dabei ist die durch den Ausgangsdruck belastete Fläche größer als die ihr entgegewirkende, mit dem Eingangsdruck belastete.

Der Nachbremskolben 7 stützt sich in Öffnungsrichtung des Einlaßventils 3 auf den Druckteilungskolben 6 ab und ist in dieser Richtung vom Eingangsdruck in Raum 11 belastet, in Öffnungsrichtung des Auslaßventils von einer vorgegebenen, begrenzten Druck-oder Federkraft in Raum 13.

Die Wirkungsweise der Anordnung ist folgende:

Zu Beginn einer Bremsung trifft der Eingangsdruck in Raum 11 auf den Nachbremskolben 7 und in Raum 10 auf den Druckteilungskolben 6. Am Nachbremskolben 7 tritt solange keine Wirkung ein, wie die entstehende Druckkraft die ihr entgegengerichtete vorgegebene Druck-oder Federkraft nicht übersteigt. Am Druckteilungskolben 6 löst die Druckkraft des Eingangsdrucks die Öffnung des Einlaßventils 3 aus, bis durch die entgegengerichtete Wirkung des dadurch entstehenden Ausgangsdrucks in Raum 12 ein Kräftegleichgewicht vorliegt und die Abschlußstellung eingenommen wird. Das hierbei entstandene Verhältnis der Drucke entspricht dem Verhältnis der Flächen (solange der an Eingang 8 anliegende Speisedruck ausreichend hoch ist) und stellt die gewollte Verminderung des Bremsdrucks im Bereich langanhaltender Bremsungen dar. Bei weiterer Verstärkung der Bremsung überwindet der Nachbremskolben 7 die vorgegebene Gegenkraft, so daß sich das Verhältnis von Ausgangsdruck zu Eingangsdruck erhöht. Das Maximum ist durch die Höhe des Speisedrucks bestimmt.

Beim Lösen einer Bremsung vermindert sich zunächst der Eingangsdruck, so daß durch den Überschuß der Kraft des Ausgangsdrucks auf den Druckteilungskolben 6 das Auslaßventil 4 öffnet. Dabei vermindert sich der Ausgangsdruck, weil Druckluft in den mit der Umgebung verbundenen Raum 9 strömt. Bei fortschreitendem Lösevorgang wird so die geknickte Kennlinie des Ausgangsdrucks in umgekehrter Richtung druchlaufen.

Varianten des Knickventils unterscheiden sich dadurch, daß als Speisedruck der Eingangsdruck oder ein abgeleiteter Druck verwendet wird, der sich vom Eingangsdruck z.B. durch eine lastabhängige Umformung unterscheidet. Weiterhin kann die vorgebene Druck-oder Federkraft am Nachbremskolben stets bei Bremsung wirken oder abschaltbar ausgeführt sein, wodurch die Wirkung des Knickventils für bestimmte Fälle, z.B. geringe Beladung des Fahrzeuges, abgeschaltet werden kann.

## Patentansprüche

1. Ventileinrichtung für Lastbremsventile von Druckluftbremsen von Schienenfahrzeugen, mit einem Ein- und einem Auslaßventil (3, 4) für den Ein- bzw. Auslaß von Druckluft zur Bildung eines Ausgangsdrucks, der sich von einem Eingangsdruck durch seine geknickte Charakteristik unterscheidet, wobei Ein- und Auslaßventil wechselweise und in entgegengesetzte Richtung öffnen oder in einer Abschlußstellung beide geschlossen sind, und wobei das Ein- und das Auslaßventil (3, 4) durch einen Druckteilungskolben (6) und einen Nachbremskolben (7) betätigbar sind und der Druckteilungskolben (6) in Öffnungsrichtung des Einlaßventils (3) vom Eingangsdruck, auf einer gegenüberliegenden größeren Fläche vom Ausgangsdruck belastet ist und der Nachbremskolben (7) sich in Öffnungsrichtung des Einlaßventils (3) auf den Druckteilungskolben (6) abstützt und in diese Richtung vom Eingangsdruck, auf einer gegenüberliegenden Kolbenfläche von einer vorgegebenen, begrenzten Druck- oder Federkraft belastet ist.

## Claims

1. Valve device for load brake valves of rail vehicles, comprising an inlet and an outlet valve (3, 4) for the inlet or outlet of compressed air for establishing an output pressure distinguished from an input pressure by its kinked characteristic, with said inlet and outlet valve opening in alternation and in opposite directions or being closed both in a lap position, wherein said inlet and said outlet valve (3, 4) are operable by a pressure partitioning piston (6) and a secondary brake piston (7) and said pressure partitioning piston (6) is biased in the opening direction of said inlet valve (3) by the input pressure and on an opposite wider surface by the output pressure, and wherein said secondary brake piston (7) is supported in the opening direction of said inlet valve (3) on said pressure partitioning piston (6) whilst it is biased in this direction by the input pressure and on an opposite piston area by a predetermined restricted force of pressure or elastic force.

## Revendications

1. Moyen de soupape pour robinets de freinage en fonction de la charge des véhicules sur rails, comprenant une soupape respective d'admission et d'émission (3, 4) pour l'admission ou d'évacuation de l'air comprimé afin d'établir une pression d'émission différente d'une pression d'admission par sa caractéristique coudée, lesdites soupapes d'admission et d'émission ouvrant tour à tour et en directions opposées ou étant fermées toutes les deux en une position de fermeture, dans lequel lesdites soupapes d'admission et d'émission (3, 4) sont commandables par un piston de répartition de pression (6) et un piston du frein secondaire (7) et ledit piston de répartition de pression (6) est mis en précontrainte en direction d'ouverture de ladite soupape d'admission (3) par la pression d'entrée et sur une surface opposée plus grande par la pression de sortie, et dans lequel ledit piston du frein secondaire (7) s'appuie en direction d'ouverture de ladite soupape d'admission (3) sur ledit piston de répartition de pression (6) pendant qu'il est mis en précontrainte en cette direction par la pression d'entrée et sur une surface de piston opposée par un effort de pression limité déterminé ou par un effort de ressort.
